# EUROPEAN PATENT APPLICATION

(11) **EP 3 153 727 A1**
(43) Date of publication of application: **12.04.2017**
(21) Application number: 15803544.4
(22) Date of filing: 21.05.2015
(51) Int. Cl.: F16C 33/10, F01D 25/16, F01D 25/18, F02C 7/06, F16C 17/04, F16N 31/00

(54) **OIL DISCHARGING STRUCTURE FOR BEARING**

(30) Priority: 04.06.2014 JP 2014116010
(71) Applicant: Kawasaki Jukogyo Kabushiki Kaisha, Kobe-shi, Hyogo 650-8670 (JP)
(72) Inventor: SHINOHARA, Zenya, Akashi-shi Hyogo 673-8666 (JP); ARISAWA, Hidenori, Akashi-shi Hyogo 673-8666 (JP); YAMASHITA, Seiji, Akashi-shi Hyogo 673-8666 (JP); TANAKA, Katsunari, Akashi-shi Hyogo 6730014 (JP); YOSHIDA, Takeshi, Akashi-shi Hyogo 6738666 (JP)
(74) Representative: dompatent von Kreisler Selting Werner - Partnerschaft von Patent- und Rechtsanwälten mbB
(86) International application number: PCT/JP2015/064583
(87) International publication number: WO 2015/186527

(57) **Abstract**

Provided is an oil discharging structure for a bearing, including: at least one bearing configured to rotatably support a rotary shaft; a cylindrical bearing housing provided radially outward of the bearing, and configured to accommodate the bearing; an oil recovery chamber provided radially outward of the bearing housing, and configured to recover an lubricating oil supplied to the bearing; and an oil discharge passage penetrating a peripheral wall of the bearing housing in a radial direction, and configured to discharge the lubricating oil from the bearing to the oil recovery chamber. The oil discharge passage is provided with a partition wall that divides the oil discharge passage in a circumferential direction.

## Description

### CROSS REFERENCE TO THE RELATED APPLICATION

This application is based on and claims Convention priority to Japanese patent application No. 2014-116010, filed June 4, 2014, the entire disclosure of which is herein incorporated by reference as a part of this application.

### BACKGROUND OF THE INVENTION

### (Field of the Invention)

The present invention relates to an oil discharging structure for a bearing that rotatably supports a rotary shaft.

### (Description of Related Art)

In a device, such as a gas turbine engine, having a rotary shaft that rotates at a high speed, generally, lubricating oil supplied to a bearing that supports the rotary shaft is discharged to the outside of the device through an oil discharge pipe connected to an outer peripheral portion of a bearing housing that houses the bearing.

Meanwhile, the lubricating oil in the bearing housing swirls at a high speed around the bearing, particularly on the outer peripheral side, under the influence of the rotation of the rotary shaft. Therefore, in the oil discharging structure as described above, the lubricating oil that forms the swirl flow is likely to accumulate in the middle of an oil discharge passage, thereby degrading oil discharging performance. In order to suppress such swirl of the lubricating oil in the bearing housing, for example, a projection provided on an inner peripheral wall of the bearing housing has been proposed (refer to Patent Document 1, for example).

### [Related Document]

### [Patent Document]

[Patent Document 1] JP Laid-Open Patent Publication No. 2000-265990

### SUMMARY OF THE INVENTION

However, when such a projection is provided in the bearing housing, disturbance of the flow of the lubricating oil occurs on the rear side of the projection in the rotation direction. Therefore, the oil discharging performance is not sufficiently improved.

An object of the present invention is to provide, in order to solve the above-described problem, an oil discharging structure for a bearing, which is able to ensure satisfactory oil discharging performance by effectively suppressing swirl of the lubricating oil discharged from the bearing.

In order to attain the above-described object, an oil discharging structure for a bearing according to the present invention includes: at least one bearing configured to rotatably support a rotary shaft; a bearing housing of a cylindrical shape provided radially outward of the bearing, and configured to accommodate the bearing; an oil recovery chamber provided radially outward of the bearing housing, and configured to recover an lubricating oil supplied to the bearing; and an oil discharge passage penetrating a peripheral wall of the bearing housing in a radial direction, and configured to discharge the lubricating oil from the bearing to the oil recovery chamber. The oil discharge passage is provided with a partition wall that divides the oil discharge passage in a circumferential direction.

According to this configuration, the oil discharge passage for discharging the lubricating oil from the bearing to the oil recovery chamber is provided with the partition wall that divides the oil discharge passage in the circumferential direction, i.e., in the rotation direction of the rotary shaft. Thereby, the lubricating oil forming a swirling flow collides against the partition wall, and swirl of the lubricating oil is effectively suppressed. Therefore, accumulation of the lubricating oil in the oil recovery chamber is suppressed, resulting in improved oil discharging performance.

In one embodiment of the present invention, the oil discharge passage may be divided by the partition wall into divided oil discharge passages, and each of the divided oil discharge passages may be formed as an ellipse hole that has a cross-sectional shape of an ellipse having a major diameter in the circumferential direction. According to this configuration, the lubricating oil swirling in the bearing housing can be reliably introduced into the oil discharge passage by increasing the dimension of the oil discharge passage in the circumferential direction.

In one embodiment of the present invention, the oil discharge passage may be inclined towards an oil lead-out port configured to lead the lubricating oil discharged into the oil recovery chamber, to the outside. According to this configuration, the lubricating oil to be discharged to the oil recovery chamber through the oil discharge passage is rectified in the lead-out direction, whereby the oil discharging performance is further improved.

In one embodiment of the present invention, the at least one bearing may be a thrust bearing. In the large-diameter thrust bearing, since the lubricating oil swirls particularly at a high speed near the outer periphery of the bearing, the effect of improving the oil discharging performance by suppressing the swirl of the lubricating oil is particularly great.

The above-described oil discharging structure for the bearing may be applied to a gas turbine engine, for example. That is, the gas turbine engine according to the present invention is a gas turbine engine including the above-described oil discharging structure for the bearing. The rotary shaft is a rotor connecting a compressor and a turbine of the gas turbine engine, and the bearing is a bearing that supports the rotor. In this case, the bearing and the oil recovery chamber may be disposed radially inward of an air intake passage of the compressor.

According to the above-described oil discharging structure for the bearing, satisfactory oil discharging performance is ensured whereby size reduction of the oil discharging structure, particularly the oil recovery chamber, can be achieved. Therefore, a sufficient area for the air intake passage of the compressor disposed near the bearing can be secured.

Any combination of at least two elements, disclosed in the appended claims and/or the specification and/or the drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a partially cutaway side view showing a gas turbine engine to which an oil discharging structure for a bearing according to one embodiment of the present invention is applied;
Fig. 2 is an enlarged longitudinal cross-sectional view showing a bearing and its vicinity, which bearing is disposed on an inner diameter side of an air intake passage shown in Fig. 1;
Fig. 3 is a plan view schematically showing an oil recovery chamber and an oil lead-out passage which are shown in Fig. 2;
Fig. 4 is a cross-sectional view taken along a IV-IV line shown in Fig. 2;
Fig. 5A is a cross-sectional view schematically showing an example of a passage cross-sectional shape of an oil discharge passage shown in Fig. 2;
Fig. 5B is a cross-sectional view schematically showing another example of a passage cross-sectional shape of the oil discharge passage shown in Fig. 2;
Fig. 5C is a cross-sectional view schematically showing a still another example of a passage cross-sectional shape of the oil discharge passage shown in Fig. 2; and
Fig. 6 is a cross-sectional view schematically showing an inclination angle of the oil discharge passage shown in Fig. 2.

### DESCRIPTION OF EMBODIMENTS

Hereinafter, an embodiment of the present invention will be described with reference to the drawings. However, the present invention is not limited to this embodiment.

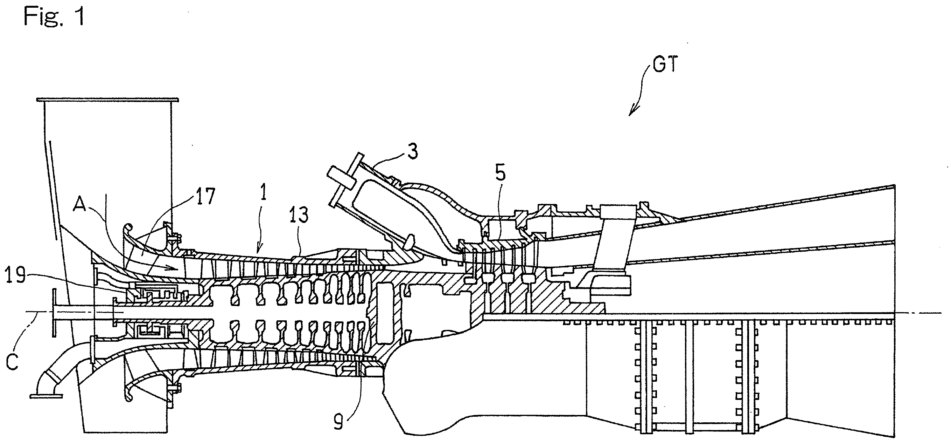

Fig. 1 shows a schematic configuration of a gas turbine engine (hereinafter referred to simply as a gas turbine) GT to which an oil discharging structure for a bearing according to one embodiment of the present invention is applied. In the gas turbine GT, introduced air A is compressed by a compressor 1, and the compressed air A is guided to a combustor 3. A fuel is injected into the combustor 3 and combusted together with the air A. This combustion causes a high-temperature and high-pressure combustion gas, and a turbine 5 is driven by the combustion gas. The turbine 5 is connected to the compressor 1 via a rotor 9 which is a rotary shaft, and the compressor 1 is driven by the turbine 5. In the following description, one side, where the compressor 1 is positioned, in the direction of an axis C of the gas turbine GT may be referred to as "front side", while an opposite side, where the turbine 5 is positioned, in the direction of the axis C may be referred to as "rear side".

In the present embodiment, the compressor 1 is an axial-flow type compressor. In the compressor 1, multiple rotor blades are disposed on an outer circumferential surface of a front portion of the rotor 9 that constitutes the rotary shaft of the gas turbine GT, and multiple stator blades are disposed on an inner circumferential surface of an engine housing 13. The compressor 1 compresses the air A sucked through an air intake passage 17 by using the rotor blades and the stator blades in combination.

The entirety of the rotor 9 is rotatably supported by the engine housing 13 through a plurality of bearing portions 19 disposed spaced from one another in the axial direction. Hereinafter, the oil discharging structure for a bearing unit 19 disposed radially inward of the air intake passage 17 of the compressor 1 will be described.

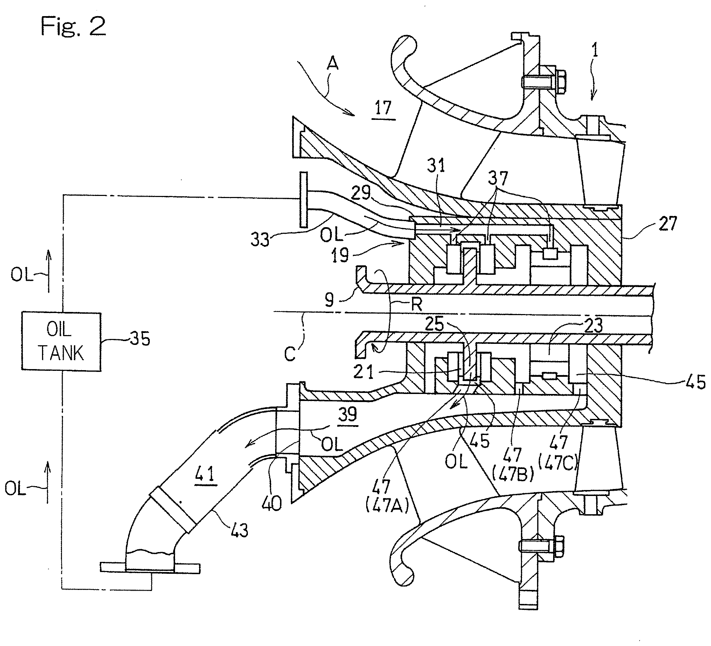

As shown in Fig. 2, the bearing unit 19 includes a thrust bearing 21 and a radial bearing 23. The thrust bearing 21 and the radial bearing 23 are disposed adjacent each other along the direction of the axis C of the rotor 9. In the illustrated example, the thrust bearing 21 is disposed on the front side, and the radial bearing 23 is disposed on the rear side. The thrust bearing 21 rotatably supports the rotor 9 while receiving an axial load of the rotor 9, via a disk-shaped thrust collar 25 radially projecting from the outer circumferential surface of the rotor 9. The radial bearing 23 rotatably supports the rotor 9 while receiving an axial load of the rotor 9, via the outer circumferential surface of the rotor 9.

A bearing housing 27 of a generally cylindrical shape is provided radially outward of the bearings 21 and 23. The thrust bearing 21 and the radial bearing 23 are supported by the engine housing 13 via the bearing housing 27. The peripheral wall 29 of the bearing housing 27 has a circumferential portion formed with an oil supply passage 31 for supplying lubricating oil OL to the thrust bearing 21 and the radial bearing 23. The oil supply passage 31 formed in the peripheral wall 29 of the bearing housing 27 is connected with an oil guide pipe 33 from the front side. The lubricating oil OL is introduced from an oil tank 35 through the oil guide pipe 33 into the oil supply passage 31. The lubricating oil OL introduced into the oil supply passage 31 is supplied to the respective bearings 21 and 23 through respective branch oil supply passages 37 that radially branche from the oil supply passage 31 formed in the bearing housing 27.

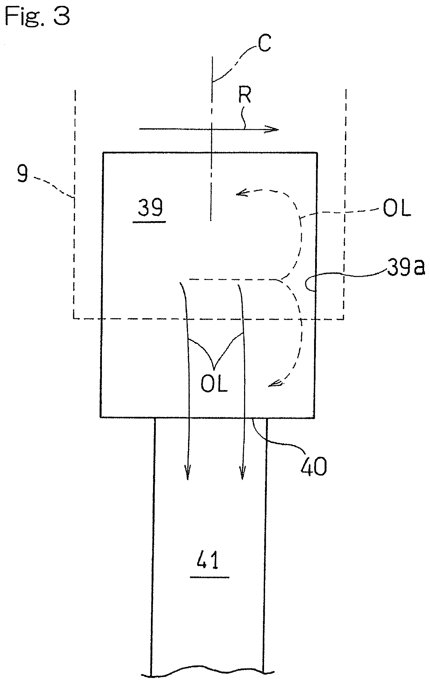

In a portion, in the circumferential direction, of the bearing housing 27, radially outward of the bearing housing 27 (a portion in the circumferential direction, different from the circumferential portion in which the oil supply passage 31 is formed), an oil recovery chamber 39 that recovers the lubricating oil OL supplied to the bearings 21 and 23 is provided. The oil recovery chamber 39 is located radially inward of the air intake passage 17 through which the air A is sucked into the compressor 1. The oil recovery chamber 39 has an oil lead-out port 40 connected with an oil lead-out pipe 43 forming an oil lead-out passage 41 that leads the recovered lubricating oil OL to the outside (to the oil tank 35 in this embodiment). In the illustrated example, the oil lead-out port 40 is in the form of an opening provided frontward of the oil recovery chamber 39. The oil lead-out passage 41 leads the lubricating oil OL frontward from the oil recovery chamber 39 in a direction substantially perpendicular to a rotation direction R of the rotor 9 which is the rotary shaft. In other words, as schematically shown in Fig. 3, the oil lead-out passage 41 extends substantially in parallel to the direction of the axis C in a plan view. In the example shown in Fig. 2, the oil lead-out passage 41 is provided so as to be inclined frontward toward the outer diameter side from the direction of the axis C.

A bearing chamber 45, which is an inner space of the bearing housing 27, communicates with the oil recovery chamber 39 via an oil discharge passage 47 formed in a circumferential portion of the peripheral wall 29 of the bearing housing 27 (a portion in the circumferential direction, different from the portion in the circumferential direction in which the oil supply passage 31 is formed). The oil discharge passage 47 is a passage penetrating the peripheral wall 29 of the bearing housing 27 in the radial direction, that is, a passage having openings respectively formed at the inner circumferential surface and the outer circumferential surface of the bearing housing 27. The lubricating oil OL is discharged from the bearings 21 and 23 through the oil discharge passage 47 to the oil recovery chamber 39. In the present embodiment, as the oil discharge passage 47, a first oil discharge passage 47A, a second oil discharge passage 47B, and a third oil discharge passage 47C are provided. The first oil discharge passage 47A is located on the outer peripheral side of the thrust bearing 21. The second and third oil discharge passages 47B and 47C are located on the outer peripheral sides of both end portions of the radial bearing 23 in the axial direction, respectively. Hereinafter, the structure of the first oil discharge passage 47A will be mainly described in detail.

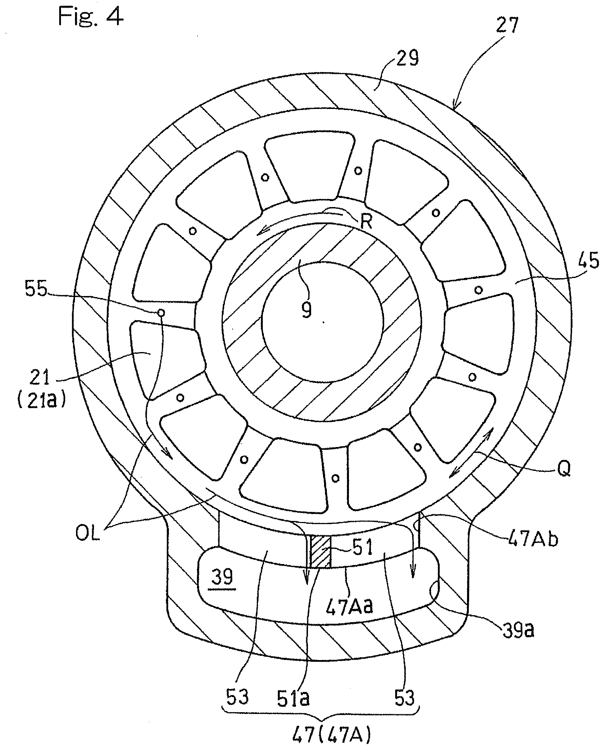

As shown in Fig. 4, in the first oil discharge passage 47A, a partition wall 51 is provided which divides the first oil discharge passage 47A in a circumferential direction Q of the peripheral wall 29 of the bearing housing 27. In the illustrated example, the first oil discharge passage 47A is divided into two oil discharge passages 53 and 53 by one partition wall 51. In other words, the first oil discharge passage 47A has the two divided oil discharge passages 53 and 53 disposed adjacent each other in the circumferential direction Q via the partition wall 51.

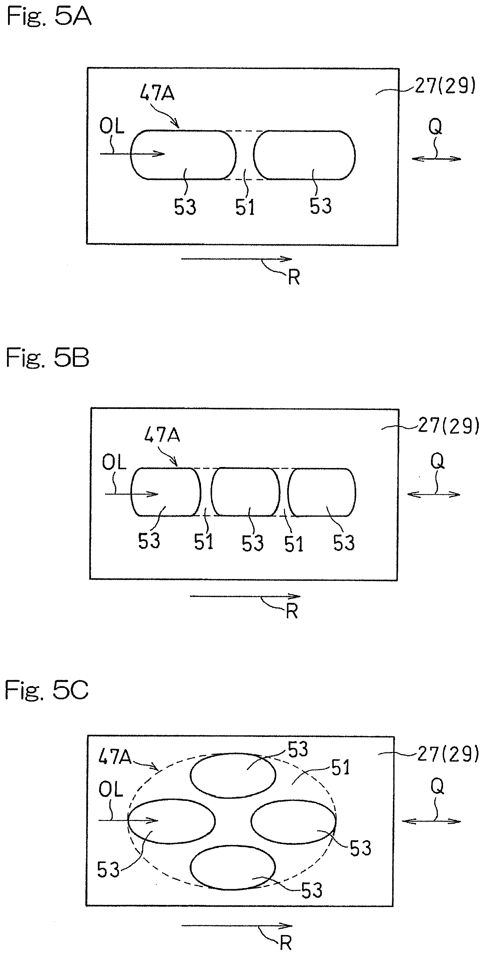

As shown in Fig. 5A, each divided oil discharge passage 53 is formed as an ellipse hole, whose cross-sectional shape is an ellipse having a major diameter in the circumferential direction Q. With the passage cross-sectional shape of each divided oil discharge passage 53 being an ellipse having a major diameter in the circumferential direction Q, in which the dimension of the first oil discharge passage 47A in the circumferential direction is increased, the lubricating oil OL that swirls in the rotation direction R can be reliably introduced into the first oil discharge passage 47A. Understandably, the passage cross-sectional shape of each divided oil discharge passage 53 is not limited to the illustrated example, and may be a circle, for example. Alternatively, the passage cross-sectional shape of each divided oil discharge passage 53 may be an ellipse having a major diameter in the axial direction. Also in this case, the circumferential dimension of the cross section of the entire first oil discharge passage 47A may be greater than the dimension in the axial direction.

The number of the partition walls 51 dividing the first oil discharge passage 47A in the circumferential direction is not limited to one. For example, as shown in Fig. 5B, the first oil discharge passage 47A may be divided into three oil discharge passages 53 by two partition walls 51. Further, the shape and arrangement of the partition walls 51 are not limited to the above examples as long as the partition wall 51 is provided to impede flow of the lubricating oil OL in the circumferential direction Q (rotation direction R) in the first oil discharge passage 47A. For example, as shown in Fig. 5C, the first oil discharge passage 47A may have four divided oil discharge passages 53 formed by means of a X-shaped partition wall 51 inclined with respect to the circumferential direction Q. Regardless of how the numbers, shapes, and arrangements of the partition walls 51 and the divided oil discharge passages 53 are set in the first oil discharge passage 47A, the entire cross section of the first oil discharge passage 47A may be symmetric in the circumferential direction Q and the front-rear direction in order to make flow of the lubricating oil OL to be discharged to the oil recovery chamber 39 uniform.

The partition wall 51 shown in Fig. 4 is not limited to the illustrated example as long as the partition wall 51 is provided so as to prevent the lubricating oil that flows from the bearing chamber 45 into the first oil discharge passage 47A from being unevenly distributed in the circumferential direction Q. Therefore, the position of an end 51 a of the partition wall 51 on the outer diameter side of the bearing housing 27 may not be coincide with the position of an end 47Aa of the first oil discharge passage 47A on the outer diameter side of the bearing housing 27 (i.e., the outer peripheral surface of the bearing housing 27). That is, although the positions, in the radial direction, of the outer diameter side ends 51a and 47Aa coincide with each other in the illustrated example, the position, in the radial direction, of the outer diameter side end 51a of the partition wall 51 may be radially inward or outward with respect to the position, in the radial direction, of the outer diameter side end 47Aa of the first oil discharge passage 47A.

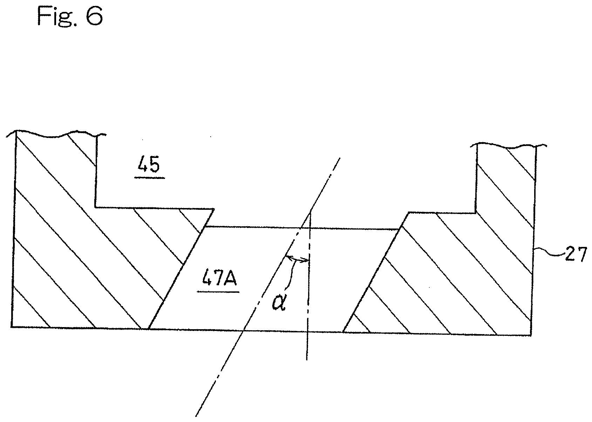

As shown in Fig. 2, the first oil discharge passage 47A is formed so as to be inclined towards the oil lead-out port 40 of the oil recovery chamber 39, in other words, in the lead-out direction of the oil lead-out passage 41. That is, in the illustrated example, the first oil discharge passage 47A is inclined frontward toward the outer diameter side with respect to the radial direction of the bearing housing 27. The first oil discharge passage 47A may be provided in parallel to the radial direction. However, by inclining the first oil discharge passage 47A as in the present embodiment, the lubricating oil OL to be discharged to the oil recovery chamber 39 is distributed in the lead-out direction, whereby the lubricating oil OL can be led from the oil recovery chamber 39 to the oil lead-out passage 41 more smoothly. An inclination angle α of the first oil discharge passage 47A with respect to the radial direction of the bearing housing 27, which is shown in Fig. 6, is preferably in a range of 20° ≤ α ≤ 40°, and more preferably in a range of 25° ≤ α ≤ 35°. In the present embodiment, α is equal to 30°.

As shown in Fig. 4, the first oil discharge passage 47A is formed substantially along the radial direction, that is, without being inclined, with respect to the circumferential direction Q. The partition wall 51 formed in the first oil discharge passage 47A is also formed substantially along the radial direction, that is, without being inclined, with respect to the circumferential direction Q.

According to the oil discharging structure for the bearing of the present embodiment, the oil discharge passage 47 (first oil discharge passage 47A) for discharging the lubricating oil OL from the thrust bearing 21 to the oil recovery chamber 39 is provided with the partition wall 51 that divides the oil discharge passage 47 in the circumferential direction Q, i.e., the rotation direction of the rotary shaft, whereby swirl of the lubricating oil OL in the oil recovery chamber 39 is effectively suppressed. That is, as shown in Fig. 4, the lubricating oil OL supplied from oil supply holes 55 to the thrust bearing 21 flows along the rotation direction R of the rotary shaft to lubricate the thrust bearing 21 (thrust pad 21 a). Thereafter, the lubricating oil OL shifts toward the outer diameter side by a centrifugal force, and forms high-speed swirl flow. The lubricating oil OL that has reached the first oil discharge passage 47A collides not only against the peripheral wall 47Ab, opposed to the rotation direction R, of the first oil discharge passage 47A but also against the partition wall 51, and flows from the two divided oil discharge passages 53 into the oil recovery chamber 39 with a swirling component thereof being significantly suppressed.

On the other hand, in the case where the partition wall 51 is not provided and the lubricating oil OL, having a great swirling component, flows into the oil recovery chamber 39, major part of the lubricating oil OL collides against an inner wall 39a of the oil recovery chamber 39 and then part of the lubricating oil OL flows in the direction opposite to the oil lead-out passage 41 (to the rear side) as shown by broken lines in Fig. 3, whereby the lubricating oil OL is accumulated, resulting in reduction in oil discharging performance. In the present embodiment, however, since the lubricating oil OL flows into the oil recovery chamber 39 with the swirling component thereof being significantly suppressed as described above, major part of the lubricating oil OL directly flows into the oil lead-out passage 41 as shown by solid lines in Fig. 3, whereby accumulation of the lubricating oil OL in the oil recovery chamber 39 is suppressed, resulting in improved oil discharging performance.

In the present embodiment, the oil discharging structure having the partition wall provided in the oil discharge passage is applied to the structure for discharging the lubricating oil OL supplied to the thrust bearing 21. The reason is as follows. The thrust bearing 21 uses a greater amount of lubricating oil than the radial bearing 23. Moreover, in the large-diameter thrust bearing 21, the lubricating oil swirls particularly at a high speed near the outer periphery of the thrust bearing 21, and therefore the effect of improving the oil discharging performance by suppressing swirl of the lubricating oil OL is particularly great. Understandably, the oil discharging structure of the present embodiment can also be applied to a structure for discharging the lubricating oil OL supplied to the radial bearing 23 shown in Fig. 2.

According to the oil discharging structure of the present embodiment, since satisfactory oil discharging performance of the bearing is ensured, size reduction of the oil discharging structure, particularly the oil recovery chamber 39, can be achieved. Therefore, in the case where, in the gas turbine GT, the above-described oil discharging structure is applied to the bearing portion including the thrust bearing 21 disposed radially inward of the air intake passage 17 of the compressor 1 and the oil recovery chamber 39 disposed radially inward of the air intake passage 17 of the compressor 1, a sufficient area for the air intake passage 17 of the compressor 1 can be secured. Understandably, the oil discharging structure can also be applied to an oil discharging structure for a bearing that supports other parts of the rotor 9 of the gas turbine GT.

In the present embodiment, the gas turbine engine is described as an example of a device including a bearing that rotatably supports a rotary shaft. However, the present invention is applicable not only to the gas turbine engine but also to other devices each including a bearing that rotatably supports a rotary shaft.

Although the preferred embodiment of the present invention has been described above with reference to the drawings, various additions, modifications, or deletions are possible without departing from the scope of the present invention. Accordingly, such additions, modifications, and deletions are to be construed as included in the scope of the present invention.

### [Reference Numerals]

- 1 ····: Compressor
- 5 ····: Turbine
- 9 ····: Rotor (rotary shaft)
- 17 ····: Air intake passage
- 21 ····: Thrust bearing
- 23 ····: Radial bearing
- 27 ····: Bearing housing
- 29 ····: Peripheral wall of bearing housing
- 39 ····: Oil recovery chamber
- 40 ····: Oil lead-out port
- 41 ····: Oil lead-out passage
- 47 ····: Oil discharge passage
- 51 ····: Partition wall
- A ····: Air
- GT ····: Gas turbine engine
- OL ····: Lubricating oil

## Claims

1. An oil discharging structure for a bearing, comprising:
at least one bearing configured to rotatably support a rotary shaft;
a bearing housing of a cylindrical shape provided radially outward of the bearing, and configured to accommodate the bearing;
an oil recovery chamber provided radially outward of the bearing housing, and configured to recover an lubricating oil supplied to the bearing; and
an oil discharge passage penetrating a peripheral wall of the bearing housing in a radial direction, and configured to discharge the lubricating oil from the bearing to the oil recovery chamber, wherein
the oil discharge passage is provided with a partition wall that divides the oil discharge passage in a circumferential direction.

2. The oil discharging structure for the bearing as claimed in claim 1, wherein the oil discharge passage is divided by the partition wall into divided oil discharge passages, each being formed as an ellipse hole that has a cross-sectional shape of an ellipse having a major diameter in the circumferential direction.

3. The oil discharging structure for the bearing as claimed in claim 1 or 2, wherein the oil discharge passage is inclined towards an oil lead-out port configured to lead the lubricating oil discharged into the oil recovery chamber, to the outside.

4. The oil discharging structure for the bearing as claimed in any one of claims 1 to 3, wherein the at least one bearing is a thrust bearing.

5. A gas turbine engine including the oil discharging structure for the bearing as claimed in any one of claims 1 to 4, wherein
the rotary shaft is a rotor connecting a compressor and a turbine of the gas turbine engine, and
the bearing is configured to support the rotor.

6. The gas turbine engine as claimed in claim 5, wherein the bearing and the oil recovery chamber are disposed radially inward of an air intake passage of the compressor.
